# EUROPÄISCHE PATENTANMELDUNG

(11) **EP 3 868 689 A1**
(43) Veröffentlichungstag der Anmeldung: **25.08.2021**
(21) Anmeldenummer: 20000077.6
(22) Anmeldetag: 21.02.2020
(51) Int. Cl.: B65F 1/02, B65F 1/10, B65F 1/12

(54) **ALTGLASENTSORGUNGSTASCHE**

(71) Anmelder: Özcan, Ali Hasret, 15831 Blankenfelde-Mahlow (DE)
(72) Erfinder: Özcan, Ali Hasret, 15831 Blankenfelde-Mahlow (DE)

(57) **Zusammenfassung**

Die Erfindung betrifft eine Schütte (1) zur Aufnahme sowie zur Abgabe von Gegenständen durch eine begrenzte Zugangsöffnung, insbesondere zur Abgabe von Altglas durch eine Zugangsöffnung in einem Altglascontainer, umfasst einen einen Aufnahmeraum ausbildenden Behälter (10) mit einem Bodenbereich sowie dem Bodenbereich im Wesentlichen gegenüberliegend eine Öffnung (11), Dabei schließt sich an die Öffnung (11) im Wesentlichen in Verlängerung eines Wandbereichs (13) zwischen dem Bodenbereich und der Öffnung (11) eine Gleiteinrichtüng (20) mit einer Gleitfläche (21) zur gezielten gleitenden Abgabe von Gegenständen aus dem Aufnahmeraum in einer Ausschüttbewegung (50) in einer Ausschüttrichtung (40) an.

## Beschreibung

Die Erfindung betrifft eine Schütte zur Aufnahme sowie zur Abgabe von Gegenständen durch eine begrenzte Zugangsöffnung, insbesondere zur Abgabe von Altglas durch eine Zugangsöffnung in einen Altglascontainer.

Glasflaschen und Konservengläser, sogenanntes Verpackungsglas, wird typischerweise nach dem Verbrauch des darin verpackten Guts zum Zweck des Recyclings vom Verbraucher im Haushalt gesammelt. Zum Sammeln des Glases, welches nun als Altglas bezeichnet wird, verwenden Verbraucher in der Regel Behältnisse wie handelsübliche Kisten, Beuteln oder Tüten. Das Altglas wird vom Verbraucher in diesen Behältnissen zu einer Sammelstelle verbracht, welche im Regelfall ein Altglascontainer ist, durch dessen Zugangsöffnung das Altglas in den Container verbracht wird. Dazu muss jedes gesammelte Stück einzeln durch die Zugangsöffnung des Containers in den Container händisch überführt werden. Dieser Vorgang birgt im Wesentlichen drei Nachteile. Zum einen kann es durch Scherben in Folge von Glasbruch zu Verletzungen kommen. Zum zweiten ist das gesammelte Gut typischerweise verschmutzt, so dass der Vorgang des händischen Überführens in den Container gesundheitliche Risiken birgt. Zum dritten kommt es vor, dass Altglas beim Transport zum Container oder beim Überführen in den Container zerbricht und somit, zumindest im direkten Umfeld des Containers, eine Gefahrenquelle durch Scherben entsteht.

Der vorliegenden Erfindung liegt die Aufgabe zugrunde, eine Schütte zur Verfügung zu stellen, welche ein einfaches Sammeln und Überführen von Gegenständen wie beispielsweise Altglas ermöglicht.

Die Aufgabe wird erfindungsgemäß gelöst durch eine Schütte gemäß Anspruch 1. Vorteilhafte Ausgestaltungsformen der Schütte werden in den Unteransprüchen 2-10 aufgezeigt.

Die Erfindung betrifft eine Schütte zur Aufnahme sowie zur Abgabe von Gegenständen durch eine begrenzte Zugangsöffnung, insbesondere zur Abgabe von Altglas durch eine Zugangsöffnung in einem Altglascontainer. Die Schütte umfasst einen einen Aufnahmeraum ausbildenden Behälter mit einem Bodenbereich sowie dem Bodenbereich im Wesentlichen gegenüberliegend eine Öffnung, wobei sich an die Öffnung im Wesentlichen in Verlängerung eines Wandbereichs zwischen dem Bodenbereich und der Öffnung eine Gleiteinrichtung mit einer Gleitfläche anschließt zur gezielten gleitenden Abgabe von Gegenständen aus dem Aufnahmeraum in einer Ausschüttbewegung in einer Ausschüttrichtung.

Mit anderen Worten betrifft die Erfindung einen bei bestimmungsgemäßer Ausrichtung nach oben in Ausschüttrichtung geöffneten Behälter, beziehungsweise Sammelbehälter, mit einer Gleiteinrichtung. Die Gleiteinrichtung kann auch als Tülle oder Stutzen bezeichnet werden. Durch die Öffnung des Behälters können Gegenstände, wie beispielsweise Altglas oder auch andere Güter, welche typischerweise gesammelt und gemeinsam als Sammelgut verbracht werden, in den Behälter eingeführt werden. Die seitliche Wandung des Behälters ist zumindest bereichsweise nach oben verlängert. Diese Verlängerung bildet die Gleiteinrichtung aus. Gleiteinrichtung und Wandung des Behälters sind vorteilhafterweise einstückig ausgeführt, es ist jedoch auch möglich, dass die Gleiteinrichtung ein separates Bauteil ist, welchen mit dem Behälter im Bereich seiner Öffnung verbunden ist und sich auf diese Art an den Behälter bzw. die Öffnung anschließt.

Die Gleiteinrichtung umfasst eine Gleitfläche. Die Gleitfläche dient dazu, die gesammelten Gegenstände gleitend aus dem Aufnahmeraum heraus abzugeben. Dazu wird die Schütte in einer Ausschüttbewegung bewegt, so dass die Gegenstände in einer Ausschüttrichtung über die Gleitfläche aus dem Behälter herausgleiten. Die Ausschüttbewegung ist ein Schwenken des Behälters um eine Achse, welche im Wesentlich parallel zum Bodenbereich und/oder parallel zu einer durch die Öffnung ausgebildeten Ebene und quer zur Ausschüttrichtung verläuft. Die Ausschüttrichtung ist die bevorzugte beziehungsweise gewünschte Richtung in der die Gegenstände beim Ausschüttvorgang bewegt werden.

Wenigstens während der Ausschüttbewegung bildet die Innenseite der Wandung, welcher die Verlängerung der Gleitfläche in Richtung Bodenbereich ausbildet, ebenfalls eine zum Gleiten der Gegenstände eingerichtete Fläche aus. Die Gleitfläche bzw. eine zum Gleiten eingerichtete Fläche zeichnen sich dadurch aus, dass das Gleiten auf der Fläche nicht mechanisch behindert ist, wie dies zum Beispiel durch Unebenheiten, Falten, Nähte und Vergleichbares möglich ist.

Der Öffnung des Behälters liegt ein Bodenbereich gegenüber, welcher in einer bevorzugten Ausführungsform eine rechteckige Grundfläche aufweist. In einer anderen Ausführungsform weist der Bodenbereich eine runde Grundfläche auf. Vorteilhafterweise sind die Gleitfläche der Gleiteinrichtung und der Wandbereich, der in seiner Verlängerung die Gleitfläche erweiternd ausbildet, in einem im Wesentlichen rechte Winkel zum Bodenbereich ausgerichtet.

Der besondere Vorteil besteht darin, dass die Schütte ein Ausschütten der im Behälter gesammelten Gegenstände auf einer definierten Bahn ermöglicht.

In einer Ausgestaltungsform weist die Gleiteinrichtung seitliche Begrenzungselemente zwecks mechanischer Rückhaltung von auszuschüttenden Gegenständen bei einer Bewegung der auszuschüttenden Gegenstände auf der Gleitfläche quer zur Ausschüttrichtung auf.

Dabei schließen die seitlichen Begrenzungen bevorzugt direkt an die Gleitfläche an und bilden eine über die Gleitfläche hinausragende Fläche aus, so dass die Gegenstände beim Ausschütten aus dem Behälter über die Gleitfläche beidseitig entlang der Ausschüttrichtung hinsichtlich ihrer Bewegung quer zur Ausschüttrichtung begrenzt sind.

Bevorzugt weisen die seitlichen Begrenzungselement eine Höhe von wenigstens 5 cm gegenüber der Gleitfläche beziehungsweise der Gleitlinie auf. Dabei bezeichnet die Gleitlinie bei einer gekrümmten Gleitfläche den gegenüber den seitlichen Begrenzungen, insbesondere den Kanten der Begrenzung, am tiefsten gelegenen Gleitbereich in Ausschüttrichtung.

Der Vorteil dieser Ausgestaltung besteht vor allem darin, dass die auszuschüttenden Gegenstände beim Ausschüttvorgang in bestimmungsgemäßer Weise der bevorzugten Ausschüttrichtung folgen und nicht quer zur Ausschüttrichtung von der Gleiteinrichtung herunterfallen können.

Der Abstand der seitlichen Begrenzungen zueinander ist vorteilhafterweise so bemessen, dass die Gleiteinrichtung wenigstens abschnittsweise in die Zugangsöffnung des beispielsweise Altglascontainers eingeführt werden kann. Bevorzugt beträgt der kürzeste Abstand A zwischen den Endkanten der seitlichen Begrenzungen weniger als 40 cm.

Eine weitere Ausgestaltungsform besteht darin, dass die seitlichen Begrenzungselemente durch Verlängerung von weiteren Wandbereichen zwischen dem Bodenbereich und der Öffnung über die Öffnung hinaus ausgebildet sind.

Mit anderen Worten bilden bevorzugt sowohl Gleitfläche als auch Begrenzungselemente der Gleiteinrichtung zusammen mit Wandbereichen des Behälters eine bauliche Einheit. Bevorzugt sind Gleitfläche und Begrenzungselemente Verlängerungen benachbarter Wandabschnitte des Behälters.

Die Gleiteinrichtung weist dabei in einem Querschnitt parallel zur Ebene, welche durch die Öffnung des Behälters ausgebildet wird und welche dem Bodenbereich im Wesentlichen gegenüberliegt, ein offenes Profil, beispielsweise ein U-Profil, auf.

Die Begrenzungselemente dienen insbesondere in dieser Ausführungsform auch dazu der Gleiteinrichtung eine Steifigkeit zu verleihen, welche verhindert, dass die Gleiteinrichtung unter der Belastung durch die Gewichtskraft der gleitenden Gegenstände quer zur Ausschüttrichtung knickbar ist, das heißt in der Art plastisch oder elastisch verformbar ist, dass Gegenstände in unbeabsichtigter Weise herunterfallen.

In einer weiteren Ausführungsform ist beträgt die maximale Längenerstreckung L_{G} der Gleiteinrichtung in Ausschüttrichtung wenigstens 5 cm beträgt.

Die maximale Längenerstreckung L_{G} bemisst sich ausgehend von der Ebene die durch die Öffnung des Behälters ausgebildet wird und die im Wesentlichen dem Bodenbereich parallel gegenüberliegt.

Diese Ausführungsform ermöglicht es, die Gleiteinrichtung wenigstens teilweise in eine Zugangsöffnung einzuführen.

In einer nächsten Ausführungsform umfasst die Schütte eine schwenkbare Trageinrichtung, die bei zumindest vollständiger Aufnahme der Gewichtskraft des Behälters mittels der Trageinrichtung die Öffnung wenigstens teilweise überdeckend ausgerichtet ist und aus diesem Bereich zwecks Freigabe der Öffnung herausschwenkbar ist.

Die Trageinrichtung kann beispielsweise ein Griff oder Henkel sein, welcher beweglich ist. Wird die Schütte an der Trageinrichtung angehoben oder aufgehängt, so befindet sich die Trageinrichtung oberhalb der Öffnung des Behälters. Somit ist die Öffnung von der Trageinrichtung wenigstens teilweise überdeckt. Die Trageinrichtung ist in der Art aus dieser Position beweglich, dass die Öffnung freigebbar ist, was bedeutet, dass sie zum Zweck des Herausschüttens der Gegenstände aus dem Behälter aus der Schüttrichtung herausbewegbar ist.

Vorteilhafterweise umfasst die Trageinrichtung einen Griffbereich, welcher beispielsweise mit einer Griffpolsterung und/oder einem an die Handform angepassten Griffstück versehen ist, welche ein bequemes Anheben und Tragen durch eine Person auch bei maximaler Befüllung der Schütte ermöglicht.

In einer weiteren Ausführungsform weist die Trageinrichtung zwei Befestigungsbereiche auf, die gelenkig an gegenüberliegenden Wandabschnitten angeordnet sind.

Vorteilhafterweise ist die Trageinrichtung in der Art an den gegenüberliegenden Wandabschnitten des Behälters miteinander verbunden, dass die Befestigungsbereiche in einer Achse parallel zur durch die Öffnung ausgebildeten Ebene quer zur Ausschüttrichtung angeordnet sind.

Die Trageinrichtung ist gelenkig angeordnet, was mit anderen Worten bedeutet, dass die Trageinrichtung um die durch die Lage der Befestigungsbereiche ausgebildete Achse schwenkbar oder drehbar ist.

Die Verbindung zwischen der Trageinrichtung und den Wandabschnitten kann dabei lösbar ausgeführt sein, so dass die Trageinrichtung abnehmbar ist.

In einer weiteren Ausführungsform weist der Behälter an einem der Gleiteinrichtung gegenüberliegenden Wandabschnitt im Bodenbereich des Behälters einen Greifbereich auf.

Bei der Realisierung der Ausschüttbewegung greift die ausschüttende Person mit einer Hand die Trageinrichtung und mit der zweiten Hand den Greifbereich im Bodenbereich des Behälters, hebt den Bodenbereich gegenüber den gelenkig angeordneten Befestigungsbereichen der Trageinrichtung an und erzeugt damit eine Schwenkbewegung um die Achse, die durch die Befestigungsbereiche ausgebildet wird. Dabei wird die Öffnung, welche in getragener Ausrichtung der Schütte teilweise von der Trageinrichtung überdeckt ist, für die herauszuschüttenden Gegenstände freigegeben. Ist der Behälter der Schütte in der beschriebenen Weise um mehr-als 90° geschwenkt, führt die Gewichtskraft der Gegenstände zu einer gleitenden Bewegung der Gegenstände aus dem Behälter entlang der Gleitfläche.

In einer nächsten Ausführungsform weist der Behälter quer zur Ausschüttrichtung im Bereich der Öffnung einen geringeren Querschnitt aufweist als am Bodenbereich.

Mit anderen Worten verjüngt sich der Behälter in Richtung Öffnung. Bevorzugt verjüngt sich der Behälter kontinuierlich.

Der Querschnitt im Bereich der Öffnung ist abhängig vom Querschitt der Zugangsöffnung des Containers, in den die Gegenstände zu überführen sind. Bevorzugt ist der Querschnitt im Bereich der Öffnung nicht größer als 40 cm, besonders bevorzugt nicht größer als 30 cm, bezüglich der längen Erstreckung des Querschnitts. Zur Realisierung einer guten Handhabbarkeit der Schütte, insbesondere eines guten Tragens, erstreckt sich der Behälter vom Bodenbereich bis zur Öffnung mit einer Höhe von bevorzugt nicht mehr als 150 cm. Die sich nach oben in Richtung Öffnung verjüngende Ausführung hat den Vorteil, einen größeren Aufnahmeraum zur Verfügung zu stellen, insbesondere im Vergleich zu einer Ausführung mit im Wesentlichen gleichbleibendem Querschnitt des Behälters.

Eine weitere Ausführungsform besteht darin, dass der Behälter und die Gleiteinrichtung im Wesentlichen aus einer Abwicklung hergestellt sind, wobei einzelne Bereiche eines zweidimensionalen Flächenelements gebogen beziehungsweise gefaltet sind und an Kanten und/oder Verbindungsbereichen von Wandbereichen, insbesondere punktuell, mechanisch beispielsweise durch Niet-, Schraub- oder Druckknopfverbindungen, miteinander fixiert oder fixierbar sind.

Insbesondere in einer Ausführungsform mit rechteckigem Bodenbereich ist es möglich Behälter und Gleitbereich aus einer Abwicklung zu formen, so dass lediglich das Tragelement als separates Bauteil gefertigt werden muss.

Diese Ausführungsform ist insbesondere in Bezug auf die Produktionskosten der erfindungsgemäßen Schütte vorteilhaft.

Die Verbindungen zur Fixierung der aus der flächigen Abwicklung geformten Schüttenbestandteile wird bevorzugt punktuell und mechanisch realisiert. Sind diese Verbindungen lösbar ausgeführt besteht ein zusätzlicher Vorteil darin, dass die Schütte bei Nichtgebrauch als im Wesentlichen flächiges Objekt platzsparend gelagert werden kann.

Es ist jedoch nicht ausgeschlossen, die Verbindungen an Kanten und Verbindungsbereichen durch Kleben oder Verschweißen zu realisieren.

In einer nächsten Ausführungsform sind die Wandbereiche des Behälters wenigstens abschnittsweise aus einem Material ausgebildet, welches eine Zugfestigkeit von mindestens 10 N/mm² und ein Elastizitätsmodul von höchstens 4*10⁹ N/mm² aufweist.

Ferner ist es vorteilhaft, wenn das Material wenigstens abschnittsweise eine Härte von wenigsten Shore D > 14 aufweist und die Schwerfestigkeit des Materials wenigstens abschnittsweise der von Rindleder entspricht.

Der mit der Materialauswahl verbundene Vorteil besteht zum einen darin, dass das Material bei Zugbelastung des Materials, insbesondere durch die Gewichtskraft der im Aufnahmeraum befindlichen Gegenstände, nicht reißt. Zum anderen weist die Schütte durch die Auswahl eines Materials gemäß wenigstens einiger der obiger Merkmale einen ausreichenden Widerstand gegen Scherbelastungen auf, wie sie beispielsweise durch Scherben auf das Material ausgeübt werden, sowie gegen eine Durchdringung des Materials durch Scherben und vergleichbare spitze Gegenstände.

Es ist nicht ausgeschlossen, dass die Schütte abschnittsweise aus unterschiedlichen Materialien hergestellt ist und/oder mit Beschichtungen versehen ist.

Darüber hinaus weisen die Verbindungen an den Kanten und Wandungsbereichen, die den Behälter ausbilden und die gelenkige Verbindung zwischen Trageinrichtung und Behälter eine Festigkeit von mindestens 10 N/mm² auf.

In einer Ausführungsform ist die Schütte, insbesondere der Behälter der Schütte, aus einem Material ausgebildet, welches eine Steifigkeit aufweist, die dem Behälter eine ausreichende mechanische Formstabilität gibt, so dass er ohne weitere Abstützung und/oder Befüllung auf seinem Bodenbereich stehend als Sammelbehälter nutzbar ist. In dieser Ausführung ist die Schütte mit einem Eimer vergleichbar. Alternativ ist das Material der Schütte so gewählt, das Ein weitere Ausführungsform besteht darin, dass das Flächenträgheitsmoment der Gleiteinrichtung um eine im Wesentlichen parallel zur Gleitfläche und quer zur Ausschüttrichtung ausgerichtete Achse wenigstens dreimal so groß ist wie das Flächenträgheitsmoment einer die Gleitfläche ausbildenden Verlängerung des Wandbereichs.

Mit anderen Worten ist die Gleiteinrichtung wenigstens abschnittsweise in der Art dreidimensional geformt, dass das Flächenträgheitsmoment, und damit die Steifigkeit der Gleiteinrichtung, dreimal so hoch ist wie bei einem, in Bezug auf Materialart, -dicke, und -abmaße mit dem dreidimensional geformten Bereich vergleichbaren, zweidimensionalen Materialabschnitt.

Der Vorteil dieser Ausgestaltungsform besteht darin, dass die Gleiteinrichtung bezüglich ihrer Steifigkeit wenigstens abschnittsweise erhöht ist, so dass sie nicht durch Beaufschlagung mit der Gewichtskraft der Gegenstände, die ausgeschüttet werde, geknickt, das heißt nicht plastisch oder elastisch verformt, werden kann.

Die Erfindung wird im Folgenden anhand des in der beiliegenden Zeichnung dargestellten Ausführungsbeispiels erläutert.

### Es zeigen

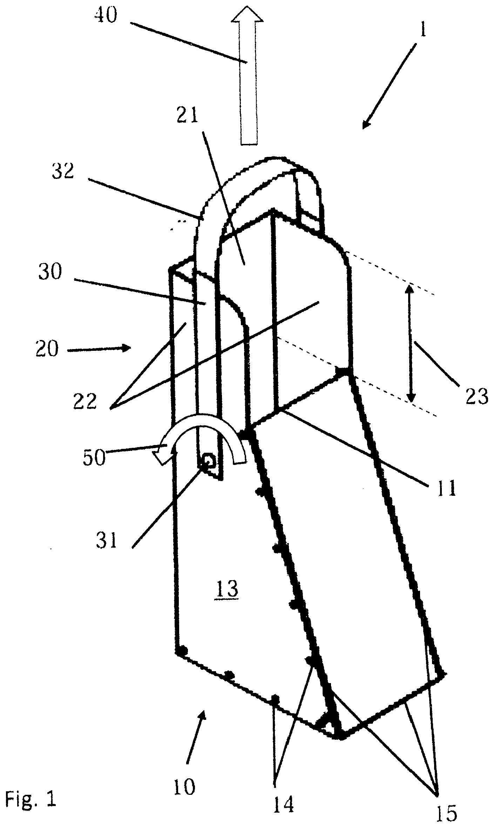

Fig. 1: eine Ausgestaltungsform der erfindungsgemäßen Schütte in dreidimensionaler Ansicht.

Figur 1 zeigt eine Ausgestaltungsform der erfindungsgemäßen Schütte 1 mit rechteckiger Grundfläche in dreidimensionaler Ansicht. Die gezeigte Schütte 1 verfügt über einen Behälter 10, eine Gleiteinrichtung 20 und eine Trageinrichtung 30. Es ist zu erkennen, dass Behälter 10 und Gleiteinrichtung 20 aus einer Abwicklung herstellbar sind, wobei die seitlichen Wandungen 13 sowie der Bodenbereich, welcher in der Darstellung nicht ersichtlich ist, durch das Biegen und Knicken eines flächigen Materials zur Schütte 1 geformt sind. Die Verbindungen an den Kanten 15 sind im gezeigten Beispiel als Nietenverbindungen 14 ausgeführt, wobei die Verbindung auch durch Knöpfen oder Schrauben ausgeführt sein könnte. Es ist ferner ersichtlich, dass sich der Behälter 10 vom Bodenbereich in Richtung Öffnung 11 verjüngt.

Die Gleiteinrichtung 20 ist als Verlängerung eines Wandbereichs 13 ausgeführt und verfügt über eine Gleitfläche 21 sowie die beiden seitlichen Begrenzungselemente 22. Die Gleiteinrichtung 20 ragt mit einer maximalen Längenerstreckung L_{G} 23 über die Öffnung 11 des Behälters 10 hinaus, Wird die Ausschüttbewegung 50 ausgeführt, so gleiten Gegenstände die sich im Aufnahmeraum des Behälters 1 befinden auf der Gleitfläche 21 aus dem Behälter 10 der Schütte 1 heraus. Dabei werden sie beidseitig von den Begrenzungselementen 22 begrenzt, so dass sie nicht quer zur Schüttrichtung 40 von der Gleitfläche 21 fallen können.

Die Schütte 1 kann mithilfe der Trageinrichtung 30 durch eine Person getragen werden. Dabei ist die Trageinrichtung 30 wie in Figur 1 dargestellt so ausgerichtet, dass sie die Öffnung 11 teilweise überdeckt, das heißt oberhalb der Öffnung 11 angeordnet ist. Die Trageinrichtung 30 verfügt im gezeigten Beispiel über einen Griffbereich 32, welcher beispielsweise gepolstert sein kann. Es ist ferner zu erkennen, dass die Trageinrichtung 30 an den Befestigungsabschnitten 31 an zwei gegenüberliegenden Wandabschnitten 13 mit dem Behälter 10 verbunden ist, Die beiden Befestigungsanschnitte 31, von denen lediglich einer in der Figur ersichtlich ist, bilden eine Achse aus. Wird die Auschüttbewegung 50 vorgenommen werden Behälter 10 und Gleiteinrichtung 20 um diese Achse geschwenkt. Die Trageinrichtung 30 bewegt sich dabei relativ betrachtet nach vorne in Richtung des gemäß der gezeigten Ansicht schrägen, die Verjüngung des Behälters ausbildenden, Wandabschnitts 13 des Behälters 10.

### Bezugszeichenliste

- Schütte: 1
- Behälter: 10
- Öffnung: 11
- Wandbereich: 13
- Nietenverbindung: 14
- Kante: 15
- Gleiteinrichtung: 20
- Gleitfläche: 21
- Begrenzungselement: 22
- maximale Längenerstreckung L_{G}: 23
- Trageinrichtung: 30
- Befestigungsabschnitt: 31
- Griffbereich: 32
- Ausschüttrichtung: 40
- Ausschüttbewegung: 50

## Patentansprüche

1. Schütte (1) zur Aufnahme sowie zur Abgabe von Gegenständen durch eine begrenzte Zugangsöffnung, insbesondere zur Abgabe von Altglas durch eine Zugangsöffnung in einem Altglascontainer, umfassend einen einen Aufnahmeraum ausbildenden Behälter (10) mit einem Bodenbereich sowie dem Bodenbereich im Wesentlichen gegenüberliegend eine Öffnung (11), wobei sich an die Öffnung (11) im Wesentlichen in Verlängerung eines Wandbereichs (13) zwischen dem Bodenbereich und der Öffnung (11) eine Gleiteinrichtung (20) mit einer Gleitfläche (21) anschließt zur gezielten gleitenden Abgabe von Gegenständen aus dem Aufnahmeraum in einer Ausschüttbewegung (50) in einer Ausschüttrichtung (40).

2. Schütte (1) nach Anspruch 1, **dadurch gekennzeichnet, dass** die Gleiteinrichtung (20) seitliche Begrenzungselemente (22) aufweist zwecks mechanischer Rückhaltung von auszuschüttenden Gegenständen bei einer Bewegung der auszuschüttenden Gegenstände auf der Gleitfläche (21) quer zur Ausschüttrichtung (40),

3. Schütte (1) nach Anspruch 2, **dadurch gekennzeichnet, dass** die seitlichen Begrenzungselemente (22) durch Verlängerung von weiteren Wandbereichen (13) zwischen dem Bodenbereich und der Öffnung (11) über die Öffnung (11) hinaus ausgebildet sind.

4. Schütte (1) nach einem der vorhergehenden Ansprüche, **dadurch gekennzeichnet, dass** die maximale Längenerstreckung L_{G} (23) der Gleiteinrichtung in Ausschüttrichtung (40) wenigstens 5 cm beträgt.

5. Schütte (1) nach einem der vorhergehenden Ansprüche, **dadurch gekennzeichnet, dass** die Schütte (1) eine schwenkbare Trageinrichtung (30) umfasst, die bei zumindest vollständiger Aufnahme der Gewichtskraft des Behälters (10) mittels der Trageinrichtung (30) die Öffnung (11) wenigstens teilweise überdeckend ausgerichtet ist und aus diesem Bereich zwecks Freigabe der Öffnung (11) herausschwenkbar ist

6. Schütte (1) nach Anspruch 4, **dadurch gekennzeichnet, dass** die schwenkbare Trageinrichtung (30) zwei Befestigungsabschnitte (31) aufweist, die gelenkig an einander gegenüberliegenden Wandbereichen (13) angeordnet sind.

7. Schütte (1) nach einem der vorhergehenden Ansprüche, **dadurch gekennzeichnet, dass** quer zur Ausschüttrichtung (40) der Behälter (10) im Bereich der Öffnung (11) einen geringeren Querschnitt aufweist als am Bodenbereich.

8. Schütte (1) nach einem der vorhergehenden Ansprüche, **dadurch gekennzeichnet, dass** der Behälter (10) und die Gleiteinrichtung (20) im Wesentlichen aus einer Abwicklung hergestellt ist, wobei einzelne Bereiche eines zweidimensionalen Flächenelements gebogen beziehungsweise gefaltet sind und an Kanten (15) und/oder Verbindungsbereichen von Wandbereichen (13), insbesondere punktuell, mechanisch beispielsweise durch Nieten-, Schrauben- oder Druckknopfverbindungen (14), miteinander fixiert oder fixierbar sind.

9. Schütte (1) nach einem der vorhergehenden Ansprüche, **dadurch gekennzeichnet, dass** die Wandbereiche (13) des Behälters (10) wenigstens abschnittsweise aus einem Material ausgebildet sind, welches eine Zugfestigkeit von mindestens 10 N/mm² und ein Elastizitätsmodul von höchstens 4^{∗}10⁹ N/mm² aufweist.

10. Schütte (1) nach einem der Ansprüche 2-8, dass das Flächenträgheitsmoment der Gleiteinrichtung (20) um eine im Wesentlichen parallel zur Gleitfläche (21) und quer zur Ausschüttrichtung (40) ausgerichtete Achse wenigstens dreimal so groß ist wie das Flächenträgheitsmoment einer die Gleitfläche (21) ausbildenden Verlängerung des Wandbereichs (13).
